(19) Europäisches Patentamt
European Patent Office
Office européen des brevets

(11) **EP 1 166 548 B1**

(12) **EUROPÄISCHE PATENTSCHRIFT**

(45) Veröffentlichungstag und Bekanntmachung des Hinweises auf die Patenterteilung:
**16.07.2003 Patentblatt 2003/29**

(21) Anmeldenummer: **00922427.0**

(22) Anmeldetag: **07.03.2000**

(51) Int Cl.[7]: **H04N 1/58**

(86) Internationale Anmeldenummer:
**PCT/DE00/00714**

(87) Internationale Veröffentlichungsnummer:
**WO 00/057632 (28.09.2000 Gazette 2000/39)**

(54) **VERFAHREN ZUR ERZEUGUNG VON ÜBERFÜLLUNGSKONTUREN IN EINER DRUCKSEITE**

METHOD FOR PRODUCING TRAPPING CONTOURS IN A PRINTED PAGE

PROCEDE DE PRODUCTION DE CONTOURS DE REMPLISSAGE PAR SUPERPOSITION DANS UNE PAGE A IMPRIMER

(84) Benannte Vertragsstaaten:
**DE FR GB IT NL**

(30) Priorität: **19.03.1999 DE 19912511**

(43) Veröffentlichungstag der Anmeldung:
**02.01.2002 Patentblatt 2002/01**

(73) Patentinhaber: **Heidelberger Druckmaschinen Aktiengesellschaft**
**69115 Heidelberg (DE)**

(72) Erfinder:
• **WEINHOLZ, Peter**
  **D-24105 Kiel (DE)**
• **FUNKE, Volkmar**
  **D-24161 Altenholz (DE)**

(56) Entgegenhaltungen:
**EP-A- 0 445 066       EP-A- 0 484 890**
**EP-A- 0 539 953       US-A- 5 686 998**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf das Gebiet der digitalen Bildverarbeitung in der Reproduktionstechnik und betrifft ein Verfahren zur Erzeugung von Überfüllungskonturen an Farbrändern in einer Druckseite. Solche Überfüllungskonturen dienen zur Reduzierung der durch Registerfehler in der Druckmaschine erzeugten Störungen, d.h. der Fehler, die dadurch entstehen, daß die Druckfarben nicht genau dekkungsgleich übereinandergedruckt werden sondern etwas gegeneinander verschoben sind.

In der Reproduktionstechnik werden Druckvorlagen für Druckseiten erzeugt, die alle zu druckenden Elemente wie Texte, grafische Objekte und Bilder enthalten.
Im Fall der elektronischen Herstellung der Druckvorlagen liegen diese Elemente in Form von digitalen Daten vor. Für ein Bild werden die Daten z.B. erzeugt, indem das Bild in einem Scanner punkt- und zeilenweise abgetastet wird, jeder Bildpunkt in Farbkomponenten zerlegt wird und die Farbwerte dieser Komponenten digitalisiert werden. Die Daten für Texte und grafische Objekte werden im allgemeinen von Textverarbeitungs- und Zeichenprogrammen direkt in einem Rechner erzeugt. Je nach dem später verwendeten Ausgabeprozeß, z.B. Ausgabe auf einem Farbdrucker oder Drukken in einer konventionellen Druckmaschine, werden die Daten für die Seitenelemente in den Farbkomponenten Rot, Grün und Blau (RGB) oder in den Druckfarben des Vierfarbdrucks Cyan, Magenta, Gelb und Schwarz (CMYK) erzeugt und gespeichert. Die Druckfarben werden in dem Farbdrucker bzw. in der Druckmaschine übereinander auf den Bedruckstoff (z.B. das Papier) gedruckt.

Im weiteren Arbeitsablauf werden die digitalisierten Texte, grafischen Objekte und Bilder in einer Bearbeitungsstation unter Sichtkontrolle auf einem Farbmonitor in vielfältiger Weise nach den Vorgaben eines Layouts bearbeitet, z.B.

farblich korrigiert oder in der Anordnung und Form verändert, und schließlich zu einer Druckseite montiert. Die Druckseitendaten werden dann in ein Datenformat umgewandelt, das für die Ausgabe geeignet ist, z.B. in die Seitenbeschreibungssprache PostScript, und gespeichert. Für jede der Druckfarben CMYK werden dabei separate Druckseitendaten erzeugt, die als Farbauszugdaten bezeichnet werden. Die Farbauszugdaten werden mit einem Film- bzw. Plattenrecorder in hoher Auflösung auf Filmmaterial oder direkt auf Druckplatten aufgezeichnet. Es gibt auch digitale Druckmaschinen, die ohne Druckplatten arbeiten. In dem Fall werden die Farbauszugdaten direkt zur digitalen Druckmaschine übertragen und dort auf dem Bedruckstoff ausgedruckt.

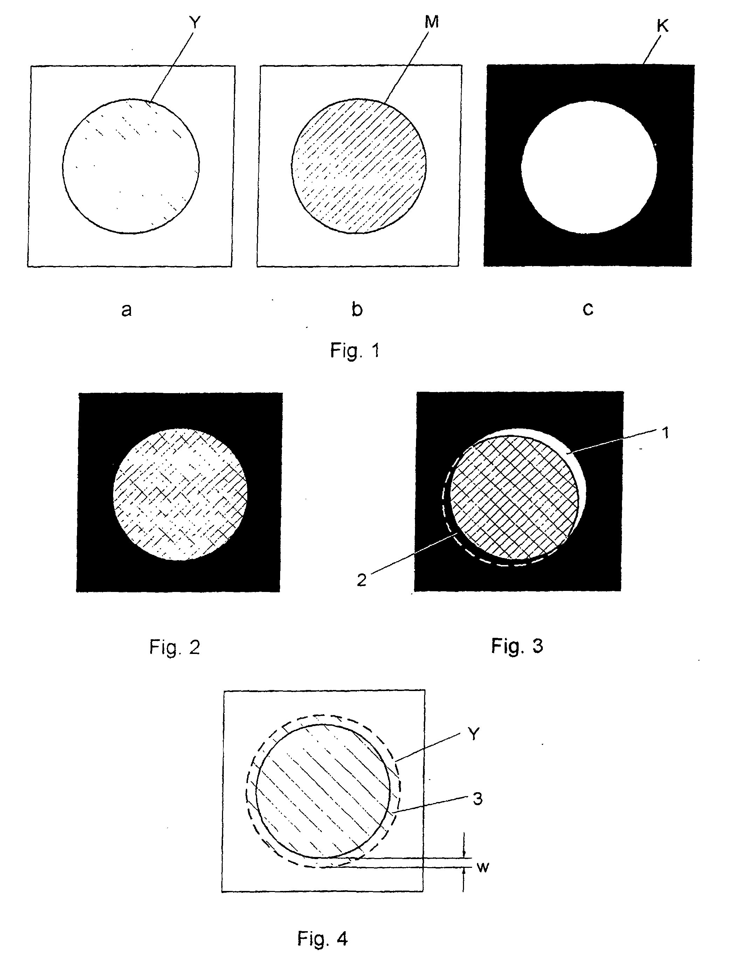

Ein Problem in der Drucktechnik sind die Registerfehler in der Druckmaschine, d.h. Fehler, die dadurch entstehen, daß die Druckfarben in den Druckwerken, durch die das Papier nacheinander läuft, nicht genau deckungsgleich übereinandergedruckt werden sondern etwas gegeneinander verschoben sind. Diese Fehler sollen an einem einfachen Beispiel veranschaulicht werden, bei dem ein roter Kreis in einer schwarzen Hintergrundfläche gedruckt wird. Fig. 1a und 1b zeigen die Farbauszüge Y und M, aus deren Übereinanderdruck der rote Kreis entsteht, und Fig. 1c zeigt den Farbauszug K der schwarzen Hintergrundfläche, in der die Fläche des Kreises ausgespart ist. Fig. 2 zeigt das Druckergebnis, wenn die Farbauszüge Y, M und K in der Druckmaschine exakt übereinandergedruckt werden. Die Farbauszüge Y und M füllen vollständig die ausgesparte Kreisfläche im Farbauszug K aus. Fig. 3 zeigt das Druckergebnis, wenn in der Druckmaschine ein Registerfehler aufgetreten ist. In diesem Beispiel ist der Farbauszug K gegenüber den Farbauszügen Y und M nach rechts oben verschoben worden, so daß die Farbauszüge Y und M die ausgesparte Kreisfläche im Farbauszug K nicht mehr vollständig aus-üllen und ein unbedruckter Streifen (1) entsteht. Da der unbedruckte Streifen (1) die Papierfarbe hat, d.h. in der Regel weiß ist, fällt er zwischen der roten und der schwarzen Farbe sehr stark auf und wird als störend empfunden. Durch die Verschiebung der Farbauszüge entsteht auch ein Streifen (2), in dem alle drei Farbauszüge Y, M und K übereinander gedruckt sind. Da hier die helleren Farben Y und M auf die dunkle Farbe K gedruckt werden, stört dieser Steifen (2) im Drukkergebnis nicht. In Fig. 3 ist zur Verdeutlichung eine sehr starke Verschiebung der Farbauszüge gezeigt. Aber auch bei einer geringeren Verschiebung, wie sie im praktischen Druckbetrieb auftritt, sind die dadurch entstehenden unbedruckten Streifen sehr störend und es müssen Gegenmaßnahmen zur Beseitigung oder Reduzierung dieser Fehler durchgeführt werden.

Der Stand der Technik und die Erfindung werden nachfolgend anhand der Figuren 1 bis 9 näher beschrieben. Es zeigen:

Fig. 1        die Farbauszüge Y, M und K für ein Druckbeispiel,
Fig. 2        den Übereinanderdruck der Farbauszüge Y, M, K ohne Registerfehler in der Druckmaschine,
Fig. 3        den Übereinanderdruck der Farbauszüge Y, M, K mit einem Registerfehler in der Druckmaschine,
Fig. 4        einen Überfüllrahmen für den Farbauszug Y,
Fig. 5        einen Überfüllrahmen für ein grafisches Objekt beliebiger Form,
Fig. 6        einen Überfüllrahmen für einen Teil der Begrenzung einer Farbfläche,
Fig. 7        verschiedene Anordnungen von vorgemerkten Nachbarpunkten,
Fig. 8        ein Ablaufdiagramm zur Auswahl von Nachbarpunkten,
Fig. 9        ein Ablaufdiagramm zur Veränderung der Farbauszugwerte des zentralen Bildpunkts,

und Fig. 10    ein Beispiel für die Ausführung der Erfindung.

Eine Möglichkeit zur Beseitigung bzw. Reduzierung des beschriebenen störenden Effekts durch die Registerfehler ist eine genauere Regelung des Druckplattenregisters bzw. der Papierführung in der Druckmaschine. Das ist jedoch aufwendig und teuer, und eine verbesserte Regelung kann auch nicht an jeder älteren Druckmaschine nachgerüstet werden.

Eine zweite Möglichkeit ist das sogenannte Überfüllen (engl. trapping) bei der Vorbereitung der Farbauszugdaten in der Reproduktionstechnik. Dabei wird in einigen Farbauszügen ein Überfüllrahmen erzeugt, in anderen Farbauszügen nicht. Durch das Überfüllen der richtigen Farbauszüge wird sichergestellt, daß bei Registerfehlern in der Druckmaschine noch eine genügend große Überlappung der grafischen Objekte in den Farbauszügen vorhanden ist, so daß keine störenden unbedruckten Streifen entstehen können. Für welche Farbauszüge ein Überfüllrahmen erzeugt werden muß und für welche nicht, hängt von den Farben innerhalb der grafischen Objekte im Verhältnis zu den Farben in ihrer unmittelbaren Umgebung ab. Eine allgemeine Regel ist dabei, daß die helleren Farben gegenüber den dunkleren Farben überfüllt werden. Dadurch werden die Umrisse der konturbestimmenden dunkleren Farben nicht verändert, und die Formen der grafischen Objekte bleiben trotz der Überlappung der Farbauszüge beim Übereinanderdruck subjektiv erhalten.

Fig. 4 zeigt einen Überfüllrahmen (3) für den Farbauszug Y aus dem Beispiel von Fig 1. d.h. der Kreis wird um die Breite w vergrößert. Wenn der Kreis in den Farbauszugen Y und M vergrößert wird, die Aussparung der Kreisfläche im Farbauszug K aber nicht, dann konnen auch bei einer Verschiebung der Farbauszüge keine störenden Streifen entstehen. Die Breite w des Überfüllrahmens (3) muß so groß gewählt werden, daß die zu erwartende maximale Verschiebung abgedeckt wird, d.h. sie ist abhängig von der Qualität und dem Alter der verwendeten Druckmaschine.

Nach dem Stand der Technik werden die Überfüllrahmen erzeugt, indem in einer Druckseite zunächst analysiert wird, welche grafischen Objekte darin enthalten sind und wo sie aneinander grenzen. Abhängig vom Typ der Objekte und von den Farben auf beiden Seiten einer Farbgrenze wird dann entschieden, welches der Objekte einen Überfüllrahmen erhält und welche Farbe der Überfüllrahmen bekommt. Unter einem grafischen Objekt wird hier eine Fläche beliebiger Form verstanden, die in beliebiger Weise mit Farbwerten gefüllt ist. Im einfachsten Fall ist die Fläche gleichmäßig mit einer konstanten Farbe gefüllt. Sie kann aber auch einen Farbverlauf enthalten, d.h. eine kontinuierliche Variation der Farben in einem bestimmten Farbbereich. Ein grafisches Objekt kann auch abgetastete Bilddaten oder ein Muster von verschiedenen Farbwerten enthalten. Die Art der Farbfüllung bestimmt den Typ eines grafischen Objekts, z.B. "gleichmäßig gefärbte Fläche"; "Farbverlauf" oder "Bild". In der Patentschrift US 5,113,249 ist ein solches Verfahren zur Erzeugung von Überfüllrahmen nach dem Stand der Technik beschrieben. Dort wird der Typ eines grafischen Objektes mit "area type" bezeichnet, und abhängig von den "area types", die sich auf beiden Seiten einer Farbgrenze befinden, wird entschieden, ob ein Überfüllrahmen erzeugt werden muß, welcher der beiden "area types" damit verbreitert wird und welche Farbe der Überfüllrahmen erhalten soll.

Bei den Verfahren nach dem Stand der Technik müssen die Typen der grafischen Objekte auf der Druckseite und ihre Begrenzungen ermittelt werden. Wenn die Druckseite in einer objektorientierten Seitenbeschreibungssprache, wie z.B. PostScript, definiert ist, kann dies durch Analyse der Seitenbeschreibung erfolgen. Ein solches Verfahren ist in der Patentschrift US 5,295,236 beschrieben. Liegt die Druckseite nicht in einer objektorientierten Beschreibung vor, sondern z.B. als Matrix von Bildpunkten, so müssen die grafischen Objekte und ihre Begrenzung mit Verfahren der Mustererkennung ermittelt werden. Solche Verfahren sind sehr rechenaufwendig.

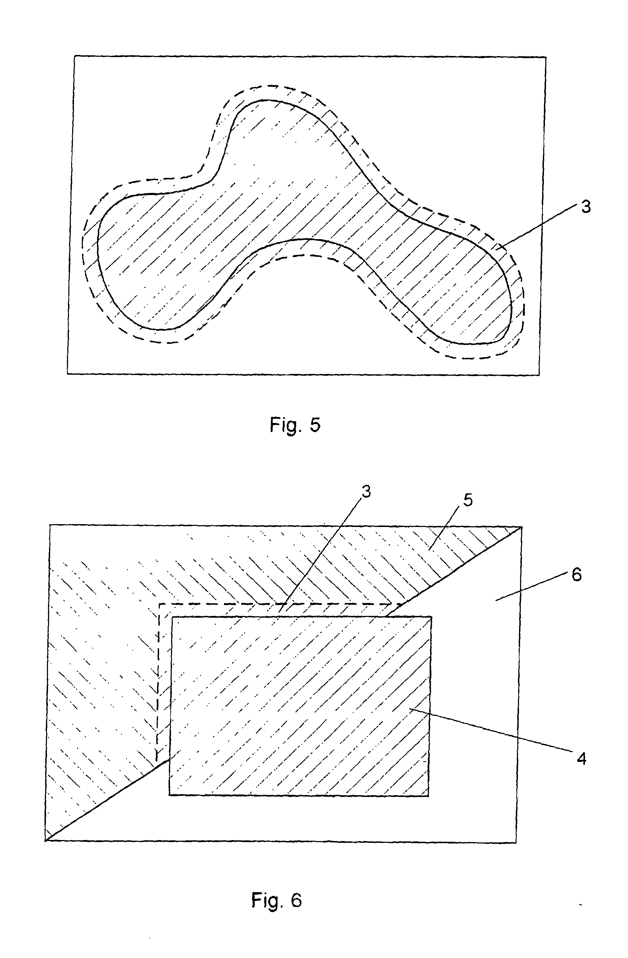

Weiterer Rechenaufwand entsteht bei den Verfahren nach dem Stand der Technik durch die Berechnung des Überfüllrahmens selbst. Nachdem entschieden ist, welches Objekt zu überfüllen ist, muß ein Rahmen mit bestimmter Breite für den Umriß des Objekts berechnet werden, wobei der Umriß eines grafischen Objekts im allgemeinen als eine Folge von Kurven- und Geradenstücken vorliegt. Wenn das Objekt eine komplexe Form hat, wie z.B. in Fig. 5 gezeigt, ist die Berechnung des Überfüllrahmens aufwendig. Eine weitere Erhöhung des Rechenaufwands ergibt sich, wenn nicht die gesamte Begrenzung des grafischen Objekts mit einem Überfüllrahmen zu versehen ist, sondern nur ein Teil. Fig. 6 zeigt ein Beispiel dafür, bei dem das grafische Objekt (4) auf einem Teil seiner Begrenzung von der Farbfläche (5) und auf dem restlichen Teil von der Farbfläche (6) umgeben ist. Dann ist z.B. nur für den Teil der Begrenzung ein Überfüllrahmen (3) zu berechnen, der an die Farbfläche (5) grenzt.

In der Patentschrift EP 0 539 953 ist ein Verfahren beschrieben, bei dem ein Überfüllrahmen mit Hilfe eines Fensteroperators erzeugt wird, der zeilenweise über eine Druckseite bewegt wird. Dabei ist vorausgesetzt, daß sich auf der Druckseite nur Flächen befinden, die gleichmäßig mit verschiedenen Farben gefüllt sind (block copy image) und deren Bildpunkte durch Farbnummern gekennzeichnet sind (region numbers). In einer Farbtabelle ist niedergelegt, welche Farben den Farbnummern zugeordnet sind. Der Fensteroperator stellt fest, ob die Bildpunkte innerhalb des Fensters, die noch mit unterschiedlichen Prioritäten versehen sind, unterschiedliche Farbnummern haben. Wenn das der Fall ist, und bestimmte Prioritätsregeln erfüllt sind, wird dem Bildpunkt im Zentrum des Fensters eine neue Farbnummer zugeordnet. Nach mehrmaligem Durchlauf des Fensteroperators über die Druckseite entstehen so an den Grenzen der ursprünglichen Farbregionen neue rahmenförmige Farbregionen mit neuen Farbnummern. Abschließend wird dann die Farbtabelle erweitert, indem den neuen Farbnummern ebenfalls Farben zugeordnet werden. Dieses Verfahren ist nur anwendbar, wenn die Druckseite ausschließlich grafische Objekte enthält, die konstantfarbige Flächen sind.

Alle Verfahren nach dem Stand der Technik unterscheiden auf der Druckseite grafische Objekte, die zu bestimmten Typen gehören, ermitteln die Grenzen dieser Objekte und erzeugen an den Grenzen jeweils einen Überfüllrahmen. Dabei erhalten die Überfüllrahmen eine konstante Farbe, die aufgrund der Farben und/oder dem Typ der angrenzenden Objekte bestimmt werden. Kein Verfahren nach dem Stand der Technik bestimmt innerhalb eines abgetasteten Bildes an ausgeprägten Farbkonturen einen Überfüllrahmen, obwohl auch an solchen Farb konturen störende Effekte entstehen können, die durch Registerfehler in der Druckmaschine hervorgerufen werden.

Es ist die Aufgabe der vorliegenden Erfindung, die Nachteile der bekannten Verfahren zur Erzeugung von Überfüllrahmen zu vermeiden und ein effektives und einfaches Verfahren anzugeben, mit dem an einer Farbkontur in einer Druckseite eine Überfüllungskontur erzeugt wird, die die durch Registerfehler erzeugten störenden Effekte vermindert oder beseitigt. Das erfindungsgemäße Verfahren setzt nicht die Kenntnis der grafischen Objekte auf der Druckseite und ihres Typs voraus. Es bearbeitet jede Farbkontur in der Druckseite in gleicher Weise, unabhängig davon, ob es sich um eine Farbgrenze zwischen grafischen Objekten handelt oder um eine Farbkontur innerhalb eines abgetasteten Bildes. Die Aufgabe wird durch die Merkmale des Anspruchs 1 und der Unteransprüche 2 bis 8 gelöst.

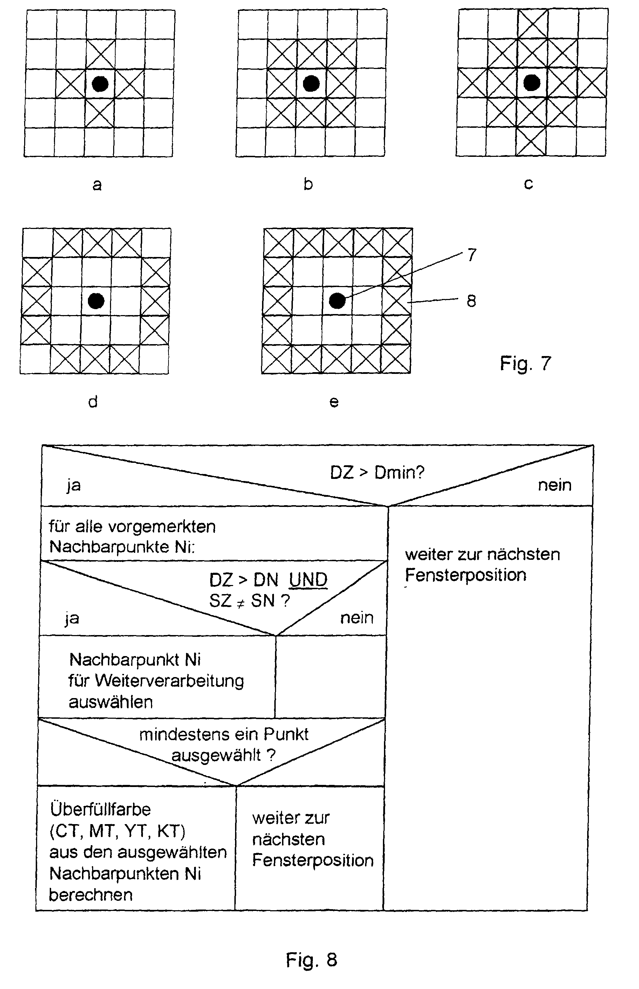

Das erfindungsgemäße Verfahren arbeitet nach Art eines Filters mit einem Fenster, das Zeile für Zeile und innerhalb jeder Zeile Bildpunkt für Bildpunkt über die gesamte Druckseite bewegt wird. Von den Bildpunkten innerhalb des Fensters sind nur bestimmte Bildpunkte für die weitere Verarbeitung vorgesehen. Fig. 7a bis Fig. 7e zeigen Beispiele für verschiedene Filterfenster. Jedes Fenster hat einen zentralen Bildpunkt (7) und bestimmte vorgemerkte Nachbarpunkte (8), die für die Weiterverarbeitung herangezogen werden können. Die übrigen Bildpunkte des Fensters tragen nicht zur Erzeugung der Überfüllungskontur bei. In jeder Position des Fensters wird eine Reihe von Berechnungen durchgeführt und entschieden, ob und wie die Farbauszugwerte des zentralen Bildpunkts (7) verändert werden. Danach wird das Fenster um einen Bildpunkt weiter bewegt, und die Berechnungen und Entscheidungen werden für die neue Fensterposition wiederholt. Die Anordnung der vorgemerkten Nachbarpunkte (8) beeinflußt die Breite der später erzeugten Überfüllungskontur.

In einem ersten Schritt wird für den zentralen Bildpunkt (7) ein gewichteter Dunkelwert DZ berechnet. Dabei werden die Farbauszuganteile des zentralen Bild punkts (CZ, MZ, YZ, KZ) nach ihrer subjektiv empfundenen Helligkeit gewichtet, da z.B. 100% Gelb als heller empfunden wird als 100% Cyan. Ebenso wird 100% Cyan als heller empfunden als 100% Magenta, das wiederum heller wirkt als 100% Schwarz. Als Gewichtsfaktoren werden beispielsweise die Faktoren 1 für Y, 3 für C, 4 für M und 8 für K festgelegt. Dann ergibt sich der Dunkelwert DZ des zentralen Bildpunkts (7) zu:

$$DZ = 3 \times CZ + 4 \times MZ + 1 \times YZ + 8 \times KZ \tag{1}$$

Mit den Farbauszugwerten CZ = 20%, MZ = 40%, YZ = 50%, KZ = 10% erhält man so z.B. den Dunkelwert DZ = 60 + 160 + 50 + 80 = 350.

Im nächsten Schritt wird der dunkelste Farbauszug SZ des zentralen Bildpunkts (7) bestimmt, d.h. der Farbauszug, der den größten Anteil zum Dunkelwert DZ beiträgt. Im obigen Beispiel hat Magenta den größten Anteil am Dunkelwert DZ, d.h. der dunkelste Farbauszug SZ ist Magenta.

Die nächsten Schritte sind als Ablaufdiagramm in Fig. 8 gezeigt. Zunächst wird geprüft, ob der Dunkelwert DZ des zentralen Bildpunkts (7) einen Schwellwert Dmin überschreitet. Als Schwellwert Dmin kann z.B. ein Wert von 10% des maximal möglichen Dunkelwerts festgelegt werden. Wenn der Schwellwert Dmin nicht überschritten wird, d. h. wenn der zentrale Bildpunkt so hell ist, daß an dieser Stelle keine Störung durch Registerfehler auftreten kann, wird das Fenster ohne weitere Berechnungen in seine nächste Position bewegt. Andernfalls werden für alle vorgemerkten Nachbarpunkte (8), die in Fig. 8 auch mit Ni bezeichnet werden, der Reihe nach der Dunkelwert DN und der dunkelste Farbauszug SN bestimmt. Nur wenn der Dunkelwert DZ des zentralen Bildpunkts größer als der Dunkelwert DN des Nachbarpunkts ist und zusätzlich die dunkelsten Farbauszüge des zentralen Bildpunkts und des Nachbarpunkts nicht gleich sind, wird der entsprechende Nachbarpunkt für die Weiterverarbeitung ausgewählt. Nur unter dieser Bedingung kann eine nennenswert sichtbare Störung bei einem Registerfehler auftreten. An schließend wird aus den Farbwerten der so ausgewählten Nachbarpunkte Ni eine Überfüllfarbe (CT, MT, YT, KT) berechnet, z.B. als Mittelwert der ausgewählten Nachbarpunkte. Die Überfüllfarbe kann aber auch nach einer beliebigen anderen Formel bestimmt werden. Es ist für das erfindungsgemäße Verfahren nur wesentlich, daß die Überfüllfarbe repräsentativ ist für die Farben der ausgewählten Nachbarpunkte Ni. Wenn keine Nachbarpunkte für die Weiterverarbeitung ausgewählt wurden, wird auch keine Überfüllfarbe berechnet und das Fenster wird zu seiner nächsten Position bewegt.

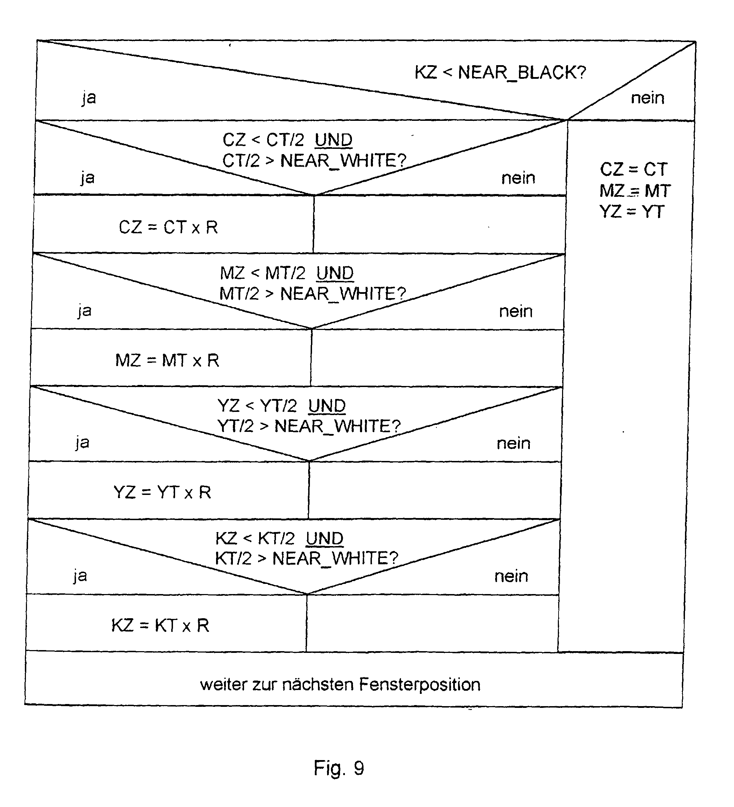

Die weiteren Schritte, mit denen entschieden wird ob und wie die Farbauszugwerte des zentralen Bildpunkts (7) verändert werden, sind in der Fig. 9 als Ablaufdiagramm gezeigt. Zunächst wird geprüft, ob der schwarze Farbauszugwert KZ des zentralen Bildpunkts kleiner als ein Schwellwert NEAR_BLACK ist, der z.B. als 90% des maximal möglichen Farbauszugwertes festgelegt werden kann. Wenn KZ nicht kleiner als der Schwellwert ist, d.h. wenn der zentrale Bildpunkt fast ganz schwarz ist, werden die übrigen Farbauszugwerte CZ, MZ, YZ des zentralen Bildpunkts durch die entsprechenden Werte CT, MT, YT der Überfüllfarbe ersetzt. Anschließend wird das Fenster in seine nächste Position bewegt.

Wenn KZ kleiner als der Schwellwert NEAR_BLACK ist, werden der Reihe nach die Farbauszugwerte des zentralen Bildpunkts und der berechneten Überfüllfarbe untersucht und daraus abgeleitet, ob und wie der Farbauszugwert des zentralen Bildpunkts verändert wird. Das soll am Beispiel des Cyan-Farbauszugs erläutert werden. Es wird geprüft, ob der Wert des zentralen Bildpunkts CZ kleiner als der halbe Wert CT der Überfüllfarbe ist, und ob gleichzeitig der halbe Wert CT der Überfüllfarbe größer als ein Schwellwert NEAR_WHITE ist, der z.B. als 10% des maximal möglichen Farbauszugwertes festgelegt werden kann. Für die Erfindung ist nicht wesentlich, daß genau der halbe Wert CT gewählt wird. Es soll nur geprüft werden, ob der Farbauszugwert im zentralen Bildpunkt deutlich kleiner als der entsprechende Farbauszugwert der Überfüllfarbe ist, und ob der Farbauszugwert der Überfüllfarbe nicht zu dicht am Weißwert liegt. Ist eine der beiden Bedingungen nicht erfüllt, dann "lohnt es sich nicht", den Farbauszugwert im zentralen Bildpunkt zu verändern, weil die Veränderung dann nicht oder kaum die gewünschte Wirkung hat. Sind jedoch beide Bedingungen erfüllt, dann wird der Farbauszugwert CZ des zentralen Bildpunkts durch einen Wert ersetzt, der sich aus der Multiplikation des Farbauszugwertes CT der Überfüllfarbe mit einem Reduktionsfaktor R ergibt. Mit dem Reduktionsfaktor R wird erreicht, daß die erzeugte Überfüllkontur z.B. in einem Bild weniger deutlich sichtbar ist. Für R kann beispielsweise der Wert 0,75 festgelegt werden. Wie das Ablaufdiagramm in Fig. 9 zeigt, läuft die beschriebene Prüfung des zentralen Bildpunkts und der Überfüllfarbe und die Veränderung des zentralen Bildpunkts für die anderen Farbauszugwerte in gleicher Weise ab. Nach der entsprechenden Behandlung aller Farbauszugwerte wird das Fenster anschließend in seine nächste Position bewegt, und alle beschriebenen Ablaufschritte werden erneut durchgeführt.

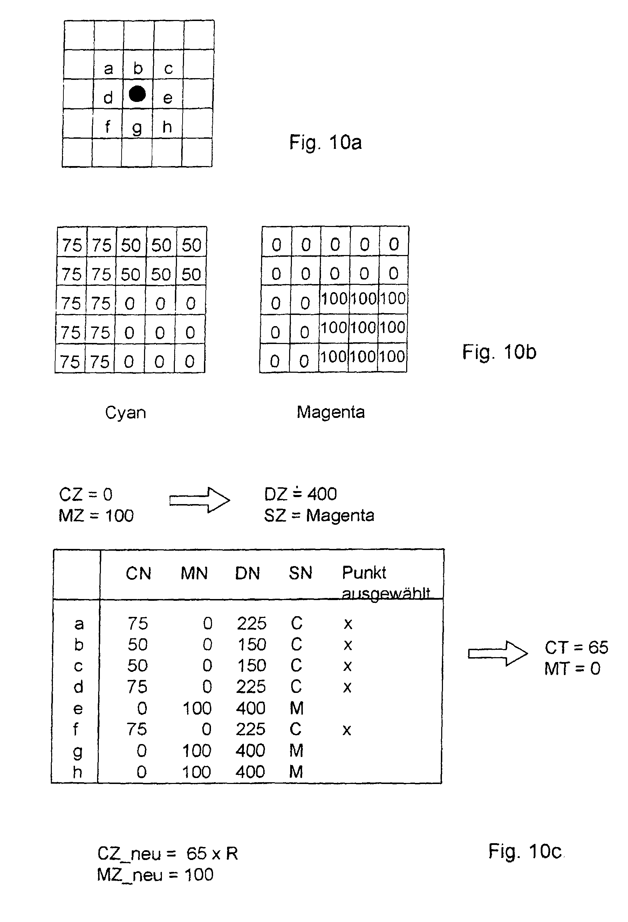

In Fig. 10 wird das erfindungsgemäße Verfahren noch einmal anhand eines Beispiels erläutert. Fig. 10a zeigt das verwendete Fenster, in dem die für die Auswahl vorgemerkten Nachbarbildpunkte mit (a, b, c, d, e, f, g, h) gekennzeichnet sind. Wegen der besseren Übersichtlichkeit ist in dem Beispiel angenommen, daß die Farbwerte nur aus den Farbauszügen Cyan und Magenta gebildet sind. Fig. 10b zeigt die Farbauszugwerte für Cyan und Magenta innerhalb des Fensters. Aus den Werten des zentralen Bildpunkts CZ = 0, MZ = 100 ergibt sich dann für den zentralen Bildpunkt der Dunkelwert DZ = 400 und der dunkelste Farbauszug SZ = Magenta. Die Tabelle in Fig. 10c zeigt die Dunkelwerte DN und den dunkelsten Farbauszug SN der Nachbarpunkte (a, b, c, d, e, f, g, h) und welche Nachbarpunkte nach dem Kriterium des Ablaufdiagramms in Fig. 8 für die weitere Verarbeitung ausgewählt werden. Aus den ausgewählten Nachbarpunkten wird die Überfüllfarbe CT = 65, MT = 0 als Mittelwert berechnet. Nach den Kriterien des Ablaufdiagramms in Fig. 9 ergibt sich daraus schließlich die veränderte Farbe im zentralen Bildpunkt zu CZ_neu = 65 x R, MZ_neu = 100. Nur der Cyan-Wert wird verändert, der Magenta-Wert bleibt unverändert, weil MZ nicht kleiner als MT/2 ist.

**Patentansprüche**

1. Verfahren zur Erzeugung von Überfüllungskonturen in einer Druckseite, die in Form von digitalen Bilddaten vorliegt, wobei die störenden Effekte von Registerfehlern in der Druckmaschine vermindert werden, und wobei ein Fenster Bildpunkt für Bildpunkt über die Bilddaten der Druckseite bewegt wird und das Fenster einen zentralen Bildpunkt (7) und für die Weiterverarbeitung vorgemerkte Nachbarpunkte (8) enthält,
   <u>**dadurch gekennzeichnet, daß**</u>

   - für den zentralen Bildpunkt (7) und für die vorgemerkten Nachbarpunkte (8) aus den Farbauszuganteilen jeweils Dunkelwerte bestimmt werden,
   - für den zentralen Bildpunkt (7) und für die vorgemerkten Nachbarpunkte (8) jeweils der dunkelste Farbauszug bestimmt wird,
   - durch Vergleich der Dunkelwerte und der dunkelsten Farbauszüge des zentralen Bildpunkts (7) und der vorgemerkten Nachbarpunkte (8) aus den vorgemerkten Nachbarpunkten (8) bestimmte Punkte ausgewählt werden,
   - aus den ausgewählten Punkten eine Überfüllfarbe berechnet wird,
   - durch Vergleich der Farbauszuganteile des zentralen Bildpunkts (7) mit den entsprechenden Farbauszuganteilen der Überfüllfarbe entschieden wird, wie der Farbauszuganteil des zentralen Bildpunkts (7) verändert wird.

2. Verfahren nach Anspruch 1, <u>**dadurch gekennzeichnet, daß**</u> die Farbauszuganteile zur Bestimmung der Dunkelwerte nach ihrer subjektiv empfundenen Helligkeit gewichtet werden.

3.  Verfahren nach Anspruch 1, **dadurch gekennzeichnet, daß** die Farbauszuganteile zur Bestimmung der dunkelsten Farbauszüge nach ihrer subjektiv empfundenen Helligkeit gewichtet werden.

4.  Verfahren nach einem der Ansprüche 1 bis 3, **dadurch gekennzeichnet, daß** aus den vorgemerkten Nachbarpunkten (8) nur die Punkte ausgewählt werden, deren Dunkelwert kleiner ist als der Dunkelwert des zentralen Bildpunkts (7) und deren dunkelster Farbauszug nicht gleich dem dunkelsten Farbauszug des zentralen Bildpunkts (7) ist.

5.  Verfahren nach einem der Ansprüche 1 bis 4, **dadurch gekennzeichnet, daß** die Farbauszuganteile der Überfüllfarbe als Mittelwert der entsprechenden Farbauszuganteile der ausgewählten Punkte berechnet werden.

6.  Verfahren nach einem der Ansprüche 1 bis 5, **dadurch gekennzeichnet, daß** ein Farbauszuganteil des zentralen Bildpunkts (7) nur verändert wird, wenn der Farbauszuganteil des zentralen Bildpunkts (7) einen ersten vom entsprechende Farbauszuganteil der Überfüllfarbe abhängigen Schwellwert unterschreitet und wenn der erste Schwellwert einen zweiten Schwellwert überschreitet.

7.  Verfahren nach einem der Ansprüche 1 bis 6, **dadurch gekennzeichnet, daß** wenn der Schwarzauszugwert des zentralen Bildpunkts (7) einen Schwellwert überschreitet, die übrigen Farbauszugwerte des zentralen Bildpunkts (7) durch die entsprechenden Farbauszugwerte der Überfüllfarbe ersetzt werden.

8.  Verfahren nach einem der Ansprüche 1 bis 7, **dadurch gekennzeichnet, daß** die Farbauszuganteile des zentralen Bildpunkts (7) verändert werden, indem sie durch die um einen Reduktionsfaktor verminderten entsprechenden Farbauszuganteile der Überfüllfarbe ersetzt werden.

**Claims**

1.  Method for producing trapping contours in a printed page existing in the form of digital image data wherein the obtrusive effects of register errors in the printing machine are reduced and wherein a window is moved pixel by pixel over the image data of the print page and the window contains a central pixel (7) and neighbour pixels (8) prioritized for further processing,
    **characterized in that**

    -   darkness values are determined from the colour separation components for the central pixel (7) and for each of the prioritized neighbour pixels (8),
    -   the darkest colour separation is determined for the central pixel (7) and for each of the prioritized neighbour pixels (8),
    -   specific pixels are selected from among the prioritized neighbour pixels (8) by comparing the darkness value and darkest colour separation of the central pixel (7) with those of the prioritized neighbour pixels (8),
    -   a trapping colour is calculated from the selected pixels,
    -   modification of the colour separation component of the central pixel (7) is decided by comparing the colour separation components of the central pixel (7) with the corresponding colour separation components of the trapping colour.

2.  Method according to Claim 1, **characterized in that** the colour separation components for the determination of darkness values are weighted according to their subjectively perceived brightness.

3.  Method according to Claim 1, **characterized in that** the colour separation components for the determination of the darkest colour separations are weighted according to their subjectively perceived brightness.

4.  Method according to any one of Claims 1 to 3, **characterized in that** only those pixels are selected from among the prioritized neighbour pixels (8) whose darkness value is lower than the darkness value of the central pixel (7) and whose darkest colour separation is not equal to the darkest colour separation of the central pixel (7).

5.  Method according to any one of Claims 1 to 4, **characterized in that** the colour separation components of the trapping colour are calculated as a mean value of the corresponding colour separation components of the selected pixels.

6. Method according to any one of Claims 1 to 5, **characterized in that** a colour separation component of the central pixel (7) is modified only if the colour separation component of the central pixel (7) is below a first threshold value dependent on the corresponding colour separation component of the trapping colour and if the first threshold value is above a second threshold value.

7. Method according to any one of Claims 1 to 6, **characterized in that** if the black separation value of the central pixel (7) is above a threshold value, the remaining colour separation values of the central pixel (7) are replaced with the corresponding colour separation values of the trapping colour.

8. Method according to any one of Claims 1 to 7, **characterized in that** the colour separation components of the central pixel (7) are modified by replacing them with the corresponding colour separation components of the trapping colour diminished by a reduction factor.

**Revendications**

1. Procédé pour réaliser des contours de remplissage dans une page d'impression se présentant sous la forme de données d'image numériques, pour réduire les effets perturbateurs de défauts de concordance dans la machine à imprimer, et selon lequel on déplace point par point sur les données image de la page d'impression une fenêtre qui comporte un point image central (7) et des points voisins (8) prédéfinis pour la suite du traitement, **caractérisé en ce qu'**

   - on définit chaque fois des valeurs sombres pour le point image central (7) et pour les points voisins prédéfinis (8) à partir des composantes d'extraits de couleur,
   - on détermine chaque fois l'extrait de couleur le plus sombre pour le point image central (7) et pour les points voisins prédéfinis (8),
   - par comparaison des valeurs sombres et des extraits de couleurs les plus sombres du point image central (7) et des points voisins prédéfinis (8) on sélectionne certains points parmi les points voisins prédéfinis (8),
   - à partir des points sélectionnés on calcule une couleur de remplissage,
   - par comparaison des composantes d'extraits de couleurs du point image central (7) et des composantes d'extraits de couleurs correspondant de la couleur de remplissage on décide comment modifier la composante d'extrait de couleur du point image central (7).

2. Procédé selon la revendication 1,
   **caractérisé en ce qu'**
   on pondère les composantes d'extraits de couleurs pour déterminer les valeurs sombres suivant leur luminosité perçue de manière subjective.

3. Procédé selon la revendication 1,
   **caractérisé en ce qu'**
   on pondère les composantes d'extraits de couleurs pour déterminer les extraits de couleurs les plus sombres selon leur luminosité perçue de manière subjective.

4. Procédé selon l'une des revendications 1 à 3,
   **caractérisé en ce que**
   parmi les points voisins prédéfinis (8) on ne sélectionne que les points dont la valeur sombre est inférieure à la valeur sombre du point image central (7) et dont l'extrait de couleur le plus sombre n'est pas égal à l'extrait de couleur le plus sombre du point image central (7).

5. Procédé selon l'une des revendications 1 à 4,
   **caractérisé en ce qu'**
   on calcule les composantes d'extraits de couleurs de la couleur de remplissage comme valeurs moyennes des composantes d'extraits de couleurs correspondantes des points sélectionnés.

6. Procédé selon l'une des revendications 1 à 5,
   **caractérisé en ce qu'**

on ne modifie une composante d'extrait de couleur du point image central (7) que si la composante d'extrait de couleur du point image central (7) est inférieure à un premier seuil dépendant de la composante d'extrait de couleur correspondante de la couleur de remplissage et si le premier seuil dépasse un second seuil.

7. Procédé selon l'une des revendications 1 à 6,
**caractérisé en ce que**
si la valeur d'extrait de couleur du point image central (7) dépasse un seuil, on remplace les autres valeurs d'extraits de couleurs du point image central (7) par des valeurs d'extraits de couleurs correspondantes de la couleur de remplissage.

8. Procédé selon l'une des revendications 1 à 7,
**caractérisé en ce qu'**
on modifie les composantes d'extraits de couleurs du point image central (7) en les remplaçant par les composantes d'extraits de couleurs correspondantes de la couleur de remplissage, composantes diminuées selon un coefficient réducteur.

Fig. 1

Fig. 2

Fig. 3

Fig. 4

Fig. 5

Fig. 6

Fig. 7

Fig. 8

KZ < NEAR_BLACK?

ja                                                                    nein

CZ < CT/2  UND
CT/2 > NEAR_WHITE?

ja                                              nein

CZ = CT
MZ = MT
YZ = YT

CZ = CT x R

MZ < MT/2  UND
MT/2 > NEAR_WHITE?

ja                                              nein

MZ = MT x R

YZ < YT/2  UND
YT/2 > NEAR_WHITE?

ja                                              nein

YZ = YT x R

KZ < KT/2  UND
KT/2 > NEAR_WHITE?

ja                                              nein

KZ = KT x R

weiter zur nächsten Fensterposition

Fig. 9

Fig. 10a

Cyan          Magenta

Fig. 10b

$CZ = 0$ ⟹ $DZ \doteq 400$
$MZ = 100$      $SZ = Magenta$

| | CN | MN | DN | SN | Punkt ausgewählt |
|---|---|---|---|---|---|
| a | 75 | 0 | 225 | C | x |
| b | 50 | 0 | 150 | C | x |
| c | 50 | 0 | 150 | C | x |
| d | 75 | 0 | 225 | C | x |
| e | 0 | 100 | 400 | M | |
| f | 75 | 0 | 225 | C | x |
| g | 0 | 100 | 400 | M | |
| h | 0 | 100 | 400 | M | |

⟹ $CT = 65$
$MT = 0$

$CZ\_neu = 65 \times R$
$MZ\_neu = 100$

Fig. 10c